# EUROPEAN PATENT APPLICATION

(11) **EP 1 596 456 A2**
(43) Date of publication of application: **16.11.2005**
(21) Application number: 05009794.8
(22) Date of filing: 04.05.2005
(51) Int. Cl.: H01M 8/10, H01M 8/02, H01M 4/86

(54) **Fuel cell**

(30) Priority: 14.05.2004 JP 2004145026
(71) Applicant: AISIN SEIKI KABUSHIKI KAISHA, Kariya-shi, Aichi-ken 448-8650 (JP)
(72) Inventor: Xie, Gang, Kariya-shi Aichi-ken 448-8650 (JP)
(74) Representative: TBK-Patent

(57) **Abstract**

A fuel cell includes an electrolyte (1) configured to be a plane plate, an anode catalyst layer (2) provided on a first face of the electrolyte, a cathode catalyst layer (3) provided on a second face of the electrolyte, a fuel diffusion layer (4) provided on a face of the anode catalyst layer which is at a back of a second face of the anode catalyst layer facing the electrolyte, an oxidant diffusion layer (5) provided on a first face of the cathode catalyst layer which is at a back of a second face of the cathode catalyst layer facing the electrolyte, and a fluid path void (51) provided on at least one of the fuel diffusion layer and the oxidant diffusion layer. Fluid including an active material flows in the fluid path void.

## Description

### FIELD OF THE INVENTION

The present invention relates to a fuel cell.

### BACKGROUND

In order to meet global environment issues and natural resource issues such as air pollution control, carbon dioxide emission control, and depletion of oil resources, fuel cells which emits clean material, have high energy density, and does not need charging time, have been thrown into limelight and have been developing at high pace. That is, fuel cells have been brought to attention as a clean power generator which generates the power by means of an electrolytic inverse reaction using hydrogen and oxygen, and without emissions other than water. Proton-exchange electrolyte membrane fuel cells in fuel cells are highly expected for automobile use and fixed use for business purpose and household use because the proton-exchange electrolyte membrane fuel cell can be operated at lower temperature.

Generally, a fuel cell is constructed by stacking numbers of single cells. Each single cell includes an electrolyte, two electrodes (i.e., anode and cathode) which sandwich the electrolyte, and a separator having a channel for fuel including an active material for an anode, and a separator having a channel for oxidant including an active material for cathode. The separators sandwich the electrodes.

Channels on the separators are formed by machining on a surface of a carbon plate or a metal plate, or the like. The cost for forming the channels on the separators accounts for significant ratio in the manufacturing cost of the fuel cell.

The anode including a fuel diffusion layer made from a porous plate and an anode catalyst layer provided on a first surface of the fuel diffusion layer is arranged so that the anode catalyst layer contacts the electrolyte in a single cell. The cathode including an oxidant diffusion layer made from a porous plate and a cathode catalyst layer provided on a first surface of the oxidant diffusion layer is arranged so that the cathode catalyst layer contacts the electrolyte in a single cell.

Fuel and oxidant are diffused in the respective diffusion layers and supplied to respective catalyst layers from each channel formed on corresponding separator, and are used for electrode reaction.

In Electrochimica Acta, Vol. 43, No. 24, pp. 3795-3809, a fuel cell in which rate controlling for supplying active material is eased by compulsorily flowing gas of the fuel or the oxidant into the corresponding diffusion layer by interrupting on the way of a channel on the separator is described.

In K. Ishida, et al., "Fractal Flow Fields: A New Design of Gas Flow Channels in Polymer Electrolyte Fuel Cells." *Proceedings for 70*^{*th*} *Spring Conventions of the Electrochemical Society of Japan,* No. 3N01, April 2003, Tokyo, a fuel cell in which significantly thin plate is used for a separator by forming fractal channel in which gas of fuel or oxidant flows on a diffusion layer in parallel to a contact surface between a catalyst layer and the diffusion layer, is described.

JP2004-39508A (i.e., [0028], [0030], Fig. 5, Fig. 8) describes a fuel cell in which plural aeration portions having different aeration rates are formed instead of forming channels on a surface of separator made from plate. This configuration is for evenly supplying the gas to the catalyst layer and reducing the manufacturing cost.

Notwithstanding, with the construction described in Electrochimica Acta, Vol. 43, No. 24, pp. 3795-3809, because the gas is compulsorily supplied into the diffusion layer having large aeration resistance, pressure loss becomes large. Also, because channels are necessary for the separator, issues for manufacturing cost of the separator remains.

Further, with the construction described in K. Ishida, et al., because the gas is supplied via the diffusion layer having large aeration resistance, pressure loss becomes large. Also, because a distance in the diffusion layer in which the gas diffuses is long, as active material supplied to the electrodes may become uneven.

With the construction described in JP2004-39508A, because the gas channel is constructed with porous body, there is a drawback that pressure loss becomes large.

A need thus exists for a fuel cell which can reduce pressure loss at diffusion layer, and reduce manufacturing cost of a separator.

### SUMMARY OF THE INVENTION

In light of the foregoing, a fuel cell includes an electrolyte configured to be a plane plate, an anode catalyst layer provided on a first face of the electrolyte, a cathode catalyst layer provided on a second face of the electrolyte, a fuel diffusion layer provided on a face of the anode catalyst layer which is at a back of a second face of the anode catalyst layer facing the electrolyte, an oxidant diffusion layer provided on a first face of the cathode catalyst layer which is at a back of a second face of the cathode catalyst layer facing the electrolyte, and a fluid path void provided on at least one of the fuel diffusion layer and the oxidant diffusion layer. Fluid including an active material flows in the fluid path void.

According to the present invention, because the fluid path void in which the fluid including the active material is provided on the diffusion layer, the active material for electrode reaction can be directly supplied to the electrode and because a course for supplying the active material to the electrode via the diffusion layer is short, the pressure loss in the diffusion layer can be reduced. Further, because the channel in which the fluid including the active material is formed on the diffusion layer, it is not necessary to form the channel on the separator, and thus the manufacturing cost of the separator can be reduced.

According to the present invention, because the fluid path void is configured to open on a first side and a second side of diffusion layer, the manufacturing cost of the diffusion layer having the channel can be reduced.

According to the present invention, because a face of a separator which faces the diffusion layer is configured to be plane, the construction of the separator can be simplified, and the manufacturing cost of the separator can be further reduced.

### BRIEF DESCRIPTION OF THE DRAWINGS

The foregoing and additional features and characteristics of the present invention will become more apparent from the following detailed description considered with reference to the accompanying drawings, wherein:

Fig. 1 is a cross-sectional view of a single cell for a fuel cell according to a first embodiment of the present invention.

Fig. 2 is a plan view of an oxidant diffusion layer viewed from a membrane-electrode assembly side.

Fig. 3 is a plan view of a separator at cathode side viewed from the oxidant diffusion layer side.

Fig. 4 is an enlarged explanatory view explaining a path that an active material of oxidant gas is supplied to a catalyst layer.

Fig. 5 is a cross-sectional view of an oxidant diffusion layer according to a second embodiment of the present invention.

Fig. 6 is a plan view of a separator at cathode side.

Fig. 7 is a plan view of a separator at anode side.

Fig. 8 is a cross-sectional view of a single cell crossing a linear portion of a channel according to the embodiments of the present invention.

Fig. 9 is a cross-sectional view of a single cell crossing a linear portion of a channel according to a comparison example.

Fig. 10 is a graph showing power generation test results according to the embodiments of the present invention and the comparison example.

### DETAILED DESCRIPTION

Embodiments of the present invention will be explained with reference to illustrations of drawing figures as follows.

A polymer electrolyte fuel cell is applied to a fuel cell according to a first embodiment of the present invention. The polymer electrolyte fuel cell according to the first embodiment of the present invention includes an ion-exchange membrane 1 serving as an electrolyte. Fuel gas including hydrogen serving as an active material is used as fuel, and oxidant gas including oxygen serving as an active material is used as oxidant. Generally, air is utilized as the oxidant gas.

An anode catalyst layer 2 is formed on a first surface of the ion-exchange membrane 1, and a cathode catalyst layer 3 is formed on a second surface of the ion-exchange membrane 1. Carbon particles which support catalysts (i.e., generally, precious metal catalyst such as Pt), ion-exchange solution, and water repellent material are mixed to form a sheet, which is applied as the anode catalyst layer 2 and the cathode catalyst layer 3. The ion-exchange membrane 1, the anode catalyst layer 2, and the cathode catalyst layer 3 are combined by means of hot-press to form a membrane-electrode assembly 10.

A fuel diffusion layer 4 is provided on a first face of the anode catalyst layer 2 of the membrane-electrode assembly 10, that is, on a surface of the anode catalyst layer 2 opposite to a second face of the anode catalyst layer 2 where the ion exchange membrane 1 is in contact thereto. On the other hand, an oxidant diffusion layer 5 is provided on a fist face of the cathode catalyst layer 3 of the membrane-electrode assembly 10, that is, on a surface of the cathode catalyst layer 3 opposite to a second face of the cathode catalyst layer 3 where the ion exchange membrane 1 is in contact thereto. An anode side separator 6 is provided on a first face of the fuel diffusion layer 4, that is, on a surface of the fuel diffusion layer 4 opposite to a second face of the fuel diffusion layer 4 where the anode catalyst layer 2 is in contact thereto. A cathode side separator 7 is provided on a first surface of the oxidant diffusion layer 5, that is, on a surface of the oxidant diffusion layer 5 opposite to a second face of the oxidant diffusion layer 5 where the cathode catalyst layer 3 is in contact thereto. External peripheral portions of the anode side separator 6 and the cathode side separator 7 are assembled by means of adhesive agent. The adhesive agent forms a glued layer 8. The glued layer 8 seals the fuel diffusion layer 4 and the oxidant diffusion layer 5 to prevent the fuel and oxidant gas from leaking from the fuel diffusion layer 4 and the oxidant diffusion layer 5, respectively. The glued layer 8 covers a surrounding portion of the ion-exchange membrane 1, and seals the fuel diffusion layer 4 and the oxidant diffusion layer 5 in which fuel gas and oxidant gas apt to move to each other's side. The fuel diffusion layer 4 and the oxidant diffusion layer 5 are made from porous base member having electric conductivity, and water repellent treatment or hydrophilic treatment is applied to the fuel diffusion layer 4 and the oxidant diffusion layer 5 as necessity arises.

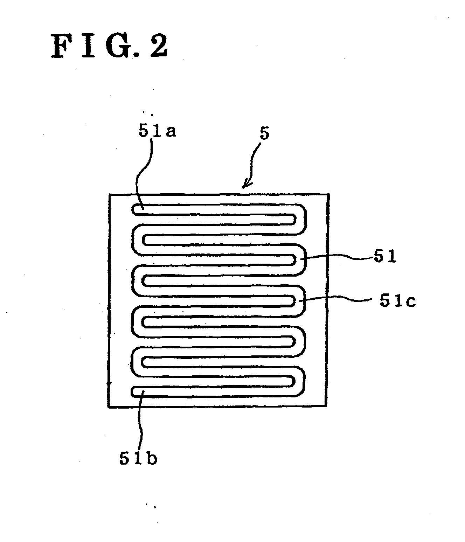

As shown in Fig. 2, a fluid path void 51 in which oxidant gas passed through is provided on the oxidant diffusion layer 5. The diffusion layers are formed with porous body having aeration such as carbon paper in order to diffuse the fluid therein. The fluid path void 51 does not include porous body such as the diffusion layers. The fluid path void 51 includes a switch-backed shaped path 51c extended from an inlet portion 51a to an outlet portion 51b. The fluid path void 51 is configured penetrating through the oxidant diffusion layer 5, that is a first side 5a (i.e., a surface at the anode catalyst layer 2 side) and a second side 5b (i.e., a surface at the cathode side separator 7 side) are open. In other words, an opening of the fluid path void 51 penetrates through in a perpendicular direction of Fig. 2. The fuel diffusion layer 4 is constructed likewise the oxidant diffusion layer 5.

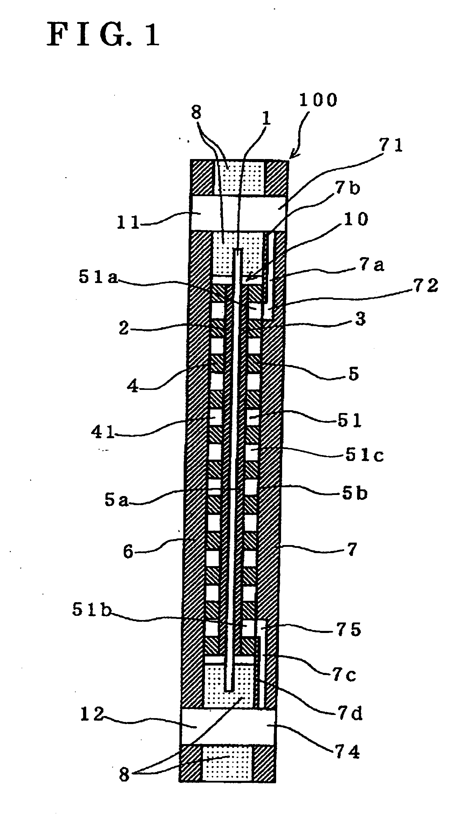

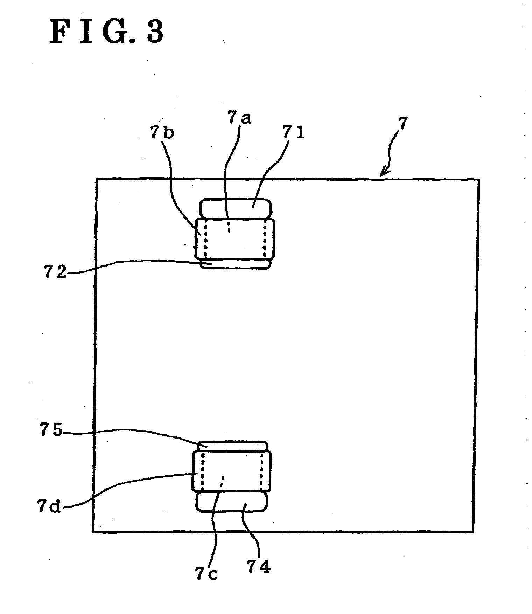

The cathode side separator 7, as shown in Fig. 1 and Fig. 3, includes an oxidant gas supply hole 71 serving as an oxidant gas supply manifold 11 when multiple numbers of single cells 100 are stacked to form a fuel cell stack, and an oxidant gas discharge hole 74 serving as an oxidant gas discharge manifold 12 when multiple numbers of single cells 100 are stacked to form a fuel cell stack. The cathode side separator 7 further includes a supply groove portion 7a which is in communication with the oxidant gas supply hole 71 for supplying oxidant gas supplied from the oxidant gas supply manifold 11 to the inlet portion 51a of the fluid path void 51. The supply groove portion 7a in communication with the inlet portion 51a is covered with a lid portion 7b except a supply port 72 so that the supply groove portion 71 is not clogged with the glued portion 8. A face of the lid portion 7b facing the glued portion 8 is approximately on the same surface with a face of the cathode side separator 7 facing the oxidant diffusion layer 5. Likewise, the cathode side separator 7 includes a discharge groove portion 7c which is in communication with the oxidant gas discharge hole 74 for discharging the oxidant gas discharged from the outlet portion 51b of the fluid path void 51 to the oxidant gas discharge manifold 12. The discharge groove portion 7c in communication with the outlet portion 51b is covered with a lid portion 7d except a discharge port 75 so that the discharge groove portion 7c is not clogged with the glued portion 8. A surface of the lid portion 7d facing the glued portion 8 is approximately on the same surface with a face of the cathode side separator 7 facing the oxidant diffusion layer 5.

Oxidant gas supplied to the oxidant gas supply manifold 11 of a fuel cell stack is supplied from outside to the inlet portion 51a of the fluid path void 51 via the supply portion 72 and the supply groove portion 7a. The oxidant gas supplied to the inlet portion 51a reaches the outlet portion 51b via the switchback shaped fluid path void 51. Thereafter, the oxidant gas is discharged from the outlet portion 51b to the oxidant gas discharge manifold 12 via the discharge port 75 and the discharge groove portion 7c, and is discharged to outside the fuel cell stack.

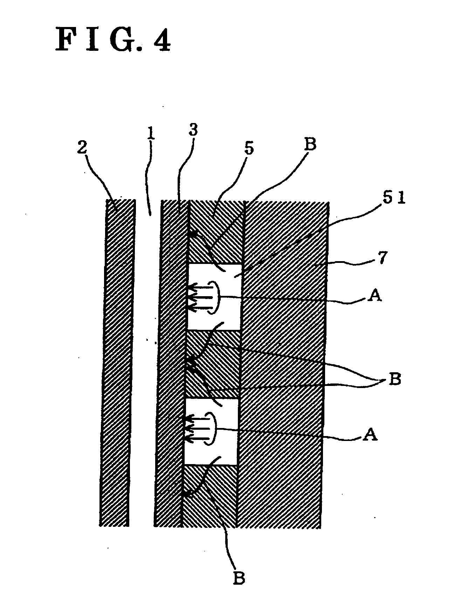

As shown in Fig. 4, oxygen serving as an active material in the oxidant gas is directly supplied to the cathode catalyst layer 3 as indicated with arrow A during it passes through the fluid path void 51 to be used for electrode reaction. Simultaneously, oxygen serving as an active material in the oxidant gas is diffused into the porous body portion of the oxidant diffusion layer 5 as indicated with arrow B to be used for electrode reaction.

Not only when the active material is directly supplied to the cathode catalyst layer 3 as indicated with arrow A but also when the active material is supplied to the electrodes via the oxidant diffusion layer 5 as indicated with arrow B, pressure loss at the diffusion layers can be reduced because a course (i.e., thickness of the oxidant diffusion layer 5) is short. Further, because the fluid path void 51 is formed on the oxidant diffusion layer 5, it is not necessary to form a channel on the cathode side separator 7, which reduces manufacturing cost of the separator.

The oxidant diffusion layer 5 is manufactured by forming the fluid path void 51 by applying press punching or wire cutting, or the like, on a sheet shaped electric conductive porous body. Further, the oxidant diffusion layer 5 may be manufactured by forming porous body by forming a sheet using resin as a binder, forming the fluid path void 51 by punching the sheet while the sheet is still soft, and removing resin by means of debinding treatment. Because the fluid path void 51 is configured to penetrate through the oxidant diffusion layer 5, the manufacturing cost of the oxidant diffusion layer 5 can be reduced.

Because the surface of the cathode side separator 7 facing the oxidant diffusion layer 5 is configured to be substantially plane, construction of the separator can be simplified, and the manufacturing cost of the separator can be further reduced.

The fuel diffusion layer 4 is configured likewise the oxidant diffusion layer 5, and the anode side separator 6 is configured likewise the cathode side separator 7. Thus, the fuel diffusion layer 4 and the anode side separator 6 have the effects likewise the oxidant diffusion layer 5 and the cathode side separator 7, respectively.

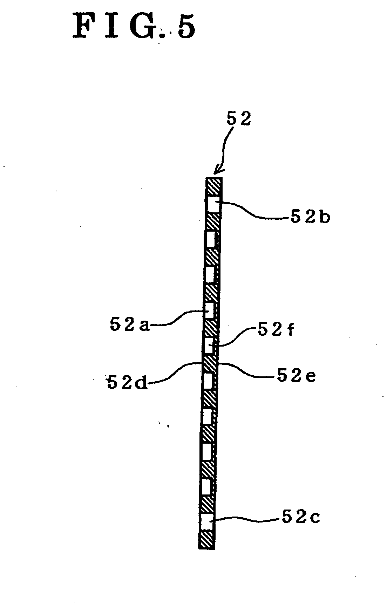

A second embodiment of the present invention will be explained as follows. A construction of a fuel cell according to the second embodiment of the present invention is approximately the same with the construction of the fuel cell according to the first embodiment of the present invention except for a construction of a diffusion layer. As shown in Fig. 5, a fluid path void 52a provided on an oxidant diffusion layer 52 is configured into switch backed shape likewise the fluid path void 51. As further shown in Fig. 5, a path 52f except at an inlet portion 52b and an outlet portion 52c opens on a first face 52d facing the cathode side catalyst layer 3, and does not open on a second face 52e facing the cathode separator. The inlet portion 52b and the outlet portion 52c open on the first face 52d and the second surface 52e to penetrate through the oxidant diffusion layer 52. The oxidant diffusion layer 52 is manufactured by machining, or by forming by means of injection molding using resin as a binder, and by removing resin by means of the debinding treatment.

Oxidant gas supplied via the inlet portion 52b reaches the outlet portion 52c via the fluid path void 52a. Oxygen serving as an active material of oxidant gas is directly supplied to the cathode catalyst layer 3 during it passes through the fluid path void 52a so as to be used for electrode reaction. Simultaneously, oxygen is diffused into porous body portion of the oxidant diffusion layer 5 and supplied to the cathode catalyst layer 3 to be used for electrode reaction. Thus, although the construction of the fluid path void 52a is different from the fluid path void 51, the fuel cell according to the second embodiment of the present invention effects likewise the fuel cell according to the first embodiment of the present invention.

A membrane-electrode assembly according to the embodiments of the present invention is produced in the following manner. 12 gram of carbon supported platinum catalyst (e.g., TEC10E60E produced by Tanaka Kikinzoku Kogyo K.K.; referred as Pt/C hereinafter) having 55wt percent of platinum supporting density, 106 gram of ion exchange resin solution with 5wt percent concentration (e.g., SS-1080 produced by Asahi Kasei Kogyo Kabushiki Kaisha), 23 gram of water, and 23 gram of isopropyl alcohol serving as forming agent are sufficiently mixed to produce catalyst paste. The catalyst paste is applied on a tetrafluoroethylene sheet to form a cathode catalyst layer by doctor blade method so that platinum supporting amount becomes 0.8mg/cm², and thereafter, the catalyst paste is dried to form a cathode catalyst layer sheet. Likewise, an anode catalyst layer sheet is formed by forming an anode catalyst layer on a tetrafluoroethylene sheet so that platinum supporting amount becomes 0.4mg /cm².

An ion exchange membrane (e.g., Nafion 112 produced by E.I. du Pont de Nemours and Company) with thickness of 50µm is sandwiched between the cathode catalyst layer sheet and the anode catalyst layer sheet so that the cathode catalyst layer of the cathode catalyst layer sheet contacts a first surface of the ion exchange membrane, and the anode catalyst layer of the anode catalyst layer sheet contacts a second surface of the ion exchange membrane, the ion exchange membrane and the catalyst layer are adhered by mean of hot pressing for three minutes at 10Mpa and 150°C, and the tetrafluoroethylene sheet is pealed to produce a membrane-electrode assembly.

A diffusion layer is produced in the following manner. 300 gram of carbon black is mixed into 1000 gram of water, and 250 gram of dispersion stock solution with 60 percent of concentration of tetrafluoroethylene (e.g., POLYFLON D1 grade produced by DAIKIN INDUSTRIES, LTD.) is added into the water and stirred for ten minutes to produce carbon ink. A carbon paper (e.g., TORAYCA TGP-120 produced by Toray Industries, Inc: thickness of 370µm, dimension of 72mm by 91mm) is provided into the carbon ink to sufficiently impregnate with the carbon ink. Thereafter, the carbon paper impregnated with the carbon ink is held in a drying oven kept at 80°C to evaporate excessive moisture, and maintained for sixty minutes at 390°C of sintering temperature to produce water repellent carbon paper. This carbon paper is used as an oxidant diffusion layer as it is.

Another carbon paper (e.g., TORAYCA TGP-120 produced by Toray Industries, Inc: thickness of 370µm, dimension of 72mm by 91mm) is cut into strips having width of 3mm. The strips of the carbon paper is impregnated with carbon ink, likewise the foregoing, to produce strips of water repellent carbon paper. Those strips of water repellent carbon paper are used as a fuel diffusion layer.

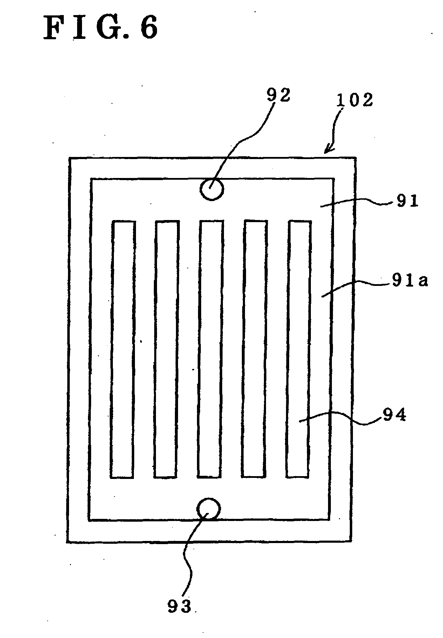

As shown in Fig. 6, a channel (fluid path void) 91 is formed on an oxidant side separator 102 by machining a fine carbon plate. Plural elongate linear portions 91a are arranged on the channel 91 in a top-bottom direction in Fig. 6. Convex portions 94 form the linear portions 91a. Size of the convex portion 94 includes height of 0.4mm, width of 3mm, and length of 91mm. A pitch between the convex portions 94 is 6mm.

A supply port 92 for supplying cathode gas and a discharge port 93 for discharging cathode gas from the channel 91 are formed on the channel 91. The supply port 92 and the discharge port 93 correspond to bores which penetrate through the fine carbon plate.

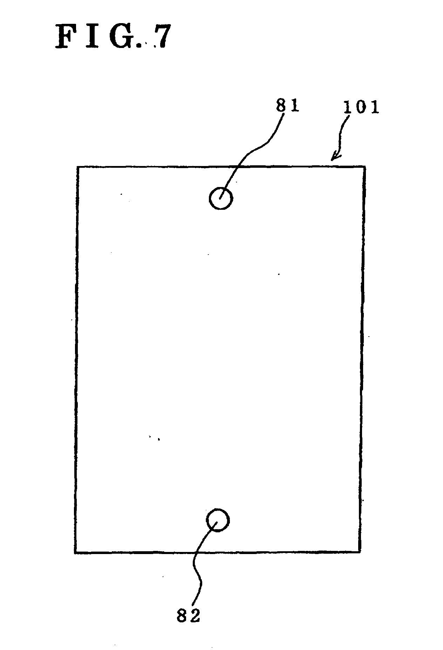

As shown in Fig. 7, an anode side separator 101 includes a supply port 81 and a discharge port 82 which correspond to bores which penetrate through the fine carbon plate.

An oxidant diffusion layer is applied to contact the cathode catalyst layer of the membrane-electrode assembly, the plural strips of carbon papers are applied to contact the anode catalyst layer of the membrane-electrode assembly with an interval of 3mm from one another so that a longitudinal direction of the strips corresponds to a longitudinal direction of the linear portion 91a, and is applied with hot-press for three minutes at 140°C and at 8MPa. A portion at which the plural strips of water repellent carbon papers are arranged to serve as the fuel diffusion layer. After applying the hot-pressing, a single cell is produced by applying the cathode side separator on the oxidant diffusion layer and by applying the anode side separator on the fuel diffusion layer.

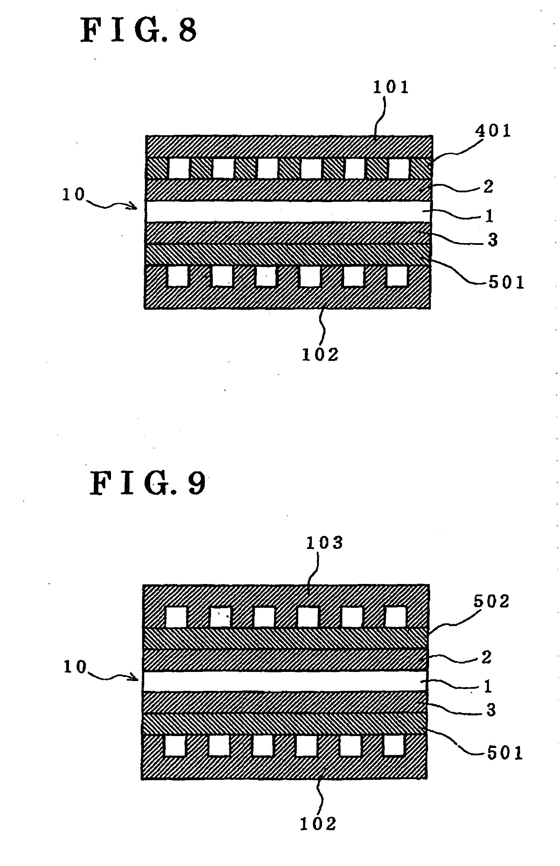

As shown in Fig. 8, a fuel diffusion layer 401 at which plural strips of water repellent carbon papers are arranged is applied on the anode catalyst layer 2 of the membrane-electrode assembly 10, and the anode side separator 101 is applied on outer side of the fuel diffusion layer 401. A lateral face of the fuel diffusion layer 401 is sealed so that fuel is not leaked outside the single cell. On the other hand, an oxidant diffusion layer 501 which is configured into a plate is applied on the anode catalyst layer 3 of the membrane-electrode assembly 10, and a cathode side separator 102 is provided on outer side of the oxidant diffusion layer 501.

An experiment of power generation was conducted by supplying the air to the cathode (i.e., utility factor of 40%) and by supplying hydrogen gas to the anode (i.e., utility factor of 90%) at normal pressure when the temperature of the cell is at 75°C using the single cell formed in the foregoing manner.

A membrane-electrode assembly according to a comparison example is produced in the following manner. An oxidant diffusion layer and a fuel diffusion layer are produced likewise the oxidant diffusion layer according to the embodiments of the present invention. A cathode side separator and an anode side separator according to the comparison example are likewise the cathode side separator and the anode side separator according to the embodiments of the present invention.

The oxidant diffusion layer is applied to the cathode catalyst layer of the membrane-electrode assembly, the fuel diffusion layer is applied to the anode catalyst layer of the membrane-electrode assembly, and the membrane-electrode assembly applied with the oxidant diffusion layer and the fuel diffusion layer is hot-pressed for three minutes at the temperature of 140°C and at 8MPa. After applying the hot press, a single cell is produced by applying the cathode side separator on the oxidant diffusion layer and by applying the anode side separator on the fuel diffusion layer. Thereafter, an experiment for the power generation was conducted in the same condition with the membrane-electrode assembly according to the embodiments of the present invention.

As shown in Fig. 9, likewise the embodiments of the present invention, a fuel diffusion layer 502 which is configured into a plate is applied on the anode catalyst layer 2 of the membrane-electrode assembly 10, and an anode side separator 103 is provided on outer side of the fuel diffusion layer 502. On the other hand, likewise the construction according to the embodiments of the present invention, an oxidant diffusion layer 501 which is configured into a plate is applied to the fuel catalyst layer 3 of the membrane-electrode assembly 10, and a cathode side separator 102 is provided on outer side of the oxidant diffusion layer 501.

The air is supplied to the cathode (i.e., utilization factor of 40%) and hydrogen gas is supplied to the anode (i.e., utilization factor of 90%) at normal pressure when the temperature of cell is at 75°C to conduct the experiment of the power generation using the single cell according to the comparison example produced in the foregoing manner.

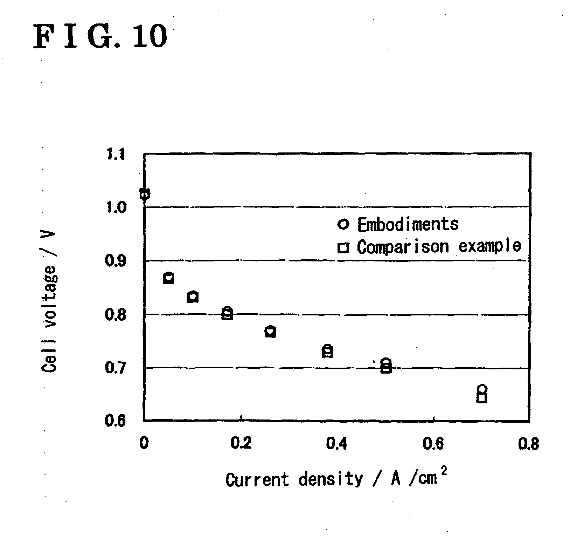

A result of experiment of the power generation is shown in Fig. 10. As shown in Fig. 10, the anode side separator 101 according to the embodiments of the present invention excels in power generation performance irrespective of a simple plate construction.

Although a case where the embodiments of the present invention are applied to the anode side diffusion layer, the embodiments of the present invention may be applied to the cathode side diffusion layer.

Although the experiment is conducted with the embodiments of the present invention having linear fluid path void and the switchback shaped channel is shown in the embodiments of the present invention, the construction of the fluid path void (channel) is not limited. For example, plural switch backed channels may be provided. Further, an interval between the plural channels may be equal interval or random interval.

Although the fluid at the cathode side corresponds to the gas including oxygen as the active material, and the fluid at the anode side corresponds to the gas including hydrogen as the active material, the fluid may correspond to liquid in case applying a fuel cell such as a direct methanol type fuel cell (i.e., methanol is applied as fuel).

According to the embodiments of the present invention, because the channel in which the fluid including the active material is provided on the diffusion layer, the active material for the electrode reaction can be directly supplied to the electrode and the course for supplying the active material to the electrode via the diffusion layer is short, the pressure loss in the diffusion layer can be reduced. Further, because the channel in which the fluid including the active material is formed on the diffusion layer, it is not necessary to form the channel on the separator, and thus the manufacturing cost of the separator can be reduced.

According to the embodiment of the present invention, because the channel is configured to open on the first side and the second side of diffusion layer, the manufacturing cost of the diffusion layer having the channel can be reduced.

According to the embodiment of the present invention, because the face of the separator which faces the diffusion layer is configured to be plane, the construction of the separator can be simplified, and the manufacturing cost of the separator can be further reduced.

A fuel cell includes an electrolyte (1) configured to be a plane plate, an anode catalyst layer (2) provided on a first face of the electrolyte, a cathode catalyst layer (3) provided on a second face of the electrolyte, a fuel diffusion layer (4) provided on a face of the anode catalyst layer which is at a back of a second face of the anode catalyst layer facing the electrolyte, an oxidant diffusion layer (5) provided on a first face of the cathode catalyst layer which is at a back of a second face of the cathode catalyst layer facing the electrolyte, and a fluid path void (51) provided on at least one of the fuel diffusion layer and the oxidant diffusion layer. Fluid including an active material flows in the fluid path void.

## Claims

1. A fuel cell comprising:
an electrolyte (1) configured to be a plane plate;
an anode catalyst layer (2) provided on a first face of the electrolyte (1);
a cathode catalyst layer (3) provided on a second face of the electrolyte (1);
a fuel diffusion layer (4) provided on a face of the anode catalyst layer (2) which is at a back of a second face of the anode catalyst layer facing the electrolyte (1); and
an oxidant diffusion layer (5) provided on a first face of the cathode catalyst layer (3) which is at a back of a second face of the cathode catalyst layer facing the electrolyte (1); **characterized in that** the fuel cell comprises
a fluid path void (51) provided on at least one of the fuel diffusion layer (4) and the oxidant diffusion layer (5), the fluid path void in which fluid including an active material flows.

2. The fuel cell according to Claim 1, wherein the fluid path void (51) opens on a first side and a second side of said at least one of the fuel diffusion layer (4) and the oxidant diffusion layer (5).

3. The fuel cell according to Claim 1, further comprising:
an anode side separator (6) provided on a first face of the fuel diffusion layer (4) which is at a back of a second face of the fuel diffusion layer facing the anode catalyst layer (2); and
a cathode side separator (7) provided on a first face of the oxidant diffusion layer (5) which is at a back of a second face of the oxidant diffusion layer facing the cathode catalyst layer (3); wherein
at least one of the anode side separator (6) and the cathode side separator (7) includes a plane surface which faces said at least one of the fuel diffusion layer (4) and the oxidant diffusion layer (5).

4. The fuel cell according to Claim 1, further comprising:
an anode side separator (6) provided on a first face of the fuel diffusion layer (4) which is at a a back of a second face of the fuel diffusion layer facing the anode catalyst layer (2); and
a cathode side separator (7) provided on a first face of the oxidant diffusion layer (5) which is at a back of a second face of the oxidant diffusion layer facing the cathode catalyst layer (3); wherein
at least one of the anode side separator (6) or the cathode side separator (7) does not include a fluid path in which fluid including the active material flows on a first face thereof facing said at least one of the fuel diffusion layer (4) and the oxidant diffusion layer (5).

5. The fuel cell according to Claim 1, wherein the fluid path void (51) includes an inlet portion (51a) for supplying the fluid from outside, an outlet portion (516) for discharging the fluid to outside, and a channel (51c) for flowing the fluid from the inlet portion (51a) to the outlet portion (51b); wherein
the channel (51c) opens to at least the anode catalyst layer (4) side or the cathode catalyst layer (5) side.

6. The fuel cell according to Claim 5, wherein the channel (51c) opens to one of the anode catalyst layer (2) side or the cathode catalyst layer (3) side and one of the cathode side separator (7) side or the anode side separator (6) side.

7. The fuel cell according to Claim 5, wherein the channel (51c) opens to one of the anode catalyst layer (2) side or the cathode catalyst layer (3) side and the channel does not open to one of the cathode side separator (7) side or the anode side separator side (6).

8. The fuel cell according to Claim 5, wherein the inlet portion (51a) opens to one of the anode catalyst layer (2) side or the cathode catalyst layer (3) side and one of the cathode side separator (7) side or the anode side separator (6) side.

9. The fuel cell according to Claim 5, wherein the outlet portion (51b) opens to one of the anode catalyst layer (2) side or the cathode catalyst layer (3) side and one of the cathode side separator (7) side or the anode side separator (6) side.

10. The fuel cell according to Claim 1, wherein the electrolyte (1) corresponds to an ion-exchange membrane (1).
